# EUROPEAN PATENT APPLICATION

(11) **EP 1 484 223 A1**
(43) Date of publication of application: **08.12.2004**
(21) Application number: 03744051.8
(22) Date of filing: 11.03.2003
(51) Int. Cl.: B60R 21/26

(54) **INFLATOR THAT CAN EASILY BE INSTALLED**

(30) Priority: 12.03.2002 JP 2002067414
(71) Applicant: Daicel Chemical Industries, Ltd., Sakai-shi, Osaka 590-8501 (JP)
(72) Inventor: GOTO, Yuzo, Himeji-shi, Hyogo 671-1241 (JP)
(74) Representative: Grünecker, Kinkeldey, Stockmair & Schwanhäusser Anwaltssozietät
(86) International application number: PCT/JP2003/002859
(87) International publication number: WO 2003/076237

(57) **Abstract**

The present invention provides a method of attaching an inflator to a module case.

The present invention is a method of attaching an inflator to a module case which comprises the following assembling processes 1 to 4.
Process 1: fixing an inflator housing by fixing means.
Process 2: attaching a positioning jig at an opening portion of the tube-like connecting member in the side to which the module case is connected, making the an opening portion of the tube-like connecting member in the side to which the module case is connected abut against the diffuser portion surface and, at the same time, adjusting the attaching direction (the angle formed by the center axis of the diffuser portion and the center axis of the tube-like connecting member) of the tube-like connecting member.
Process 3: fastening a connecting portion of the diffuser portion and the tube-like connecting member from the outside by fastening means to fix them.
Process 4: removing the positioning jig and inserting the tube-like connecting member into the module case.

## Description

### Technical Field to which the Invention belongs

The present invention relates to an inflator improved in a secure and easy attachment to a module case accommodating an air bag, a tube-like connecting member used for the attachment, an air bag system using the inflator and the tube-like connecting member, and a method of attaching an inflator to a module case.

### Background Art

In an air bag system for protecting a passenger from the impact at a vehicle collision, an inflator is connected to a module case accommodating an air bag, and the air bag is inflated by ejecting an inflating medium from the inflator. Therefore, it is necessary to connect the module case and the inflator securely, and also, an assembling at a time of assembling work has to be facilitated.

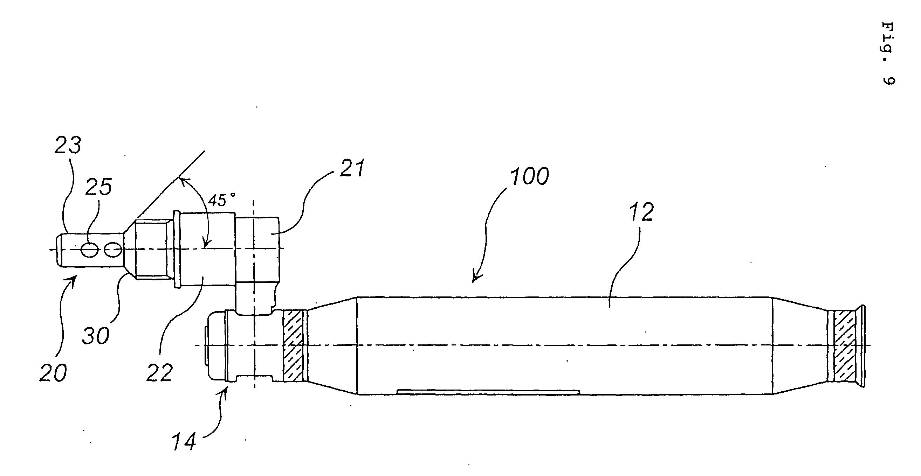

As shown in Fig. 9, a conventional inflator 100 has an inflator housing 12 in which a gas such as argon, helium or the like is charged with a high pressure, a rupturing means accommodating chamber 14 connected to the inflator housing 12 (the inflator housing 12 and the rupturing means accommodating chamber 14 may be formed integrally to be a single member) , and a diffuser portion 20 connected to the rupturing means accommodating chamber 14, and a surface of a distal end portion 30 of the diffuser 20 is formed to be a inclined surface (the axial section slops in the axial direction, which is a inclined surface).

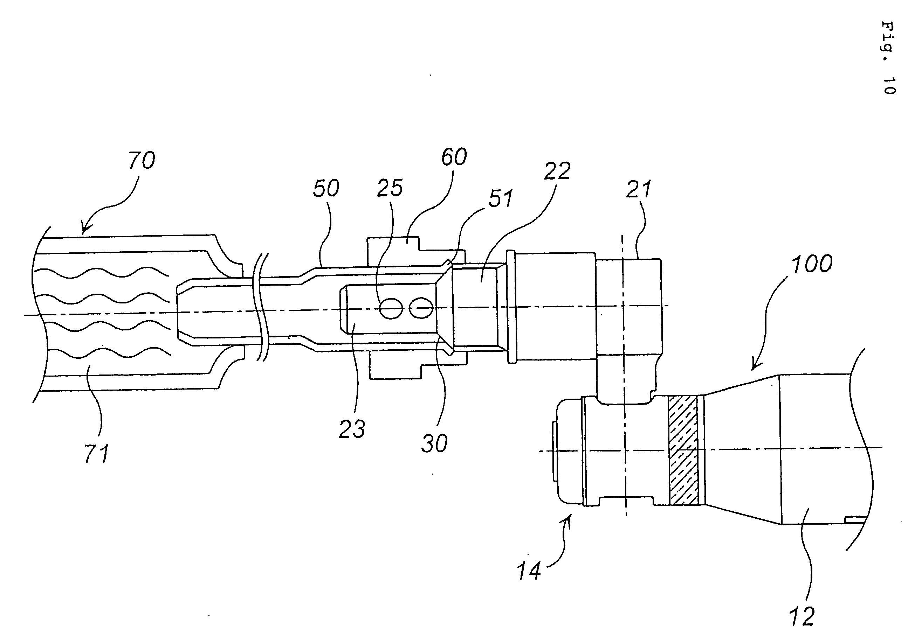

In an air bag system, as shown in Fig. 10, the inflator 100 and a module case 70 accommodating an air bag 71 are connected to each other through a tube-like connecting member 50, and the tube-like connecting member 50 is fixed by a nut 60 disposed over a diffuser protrusion portion 23 and a diffuser main body portion 22. In this case, an inner peripheral surface and an outer peripheral surface of a spreading portion 51 provided at an opening edge of one end (an opening edge contacting a surface of the distal end portion 30) in the tube-like connecting member 50 are inclined surfaces (the axial section slops in the axial direction, which is a inclined surface).

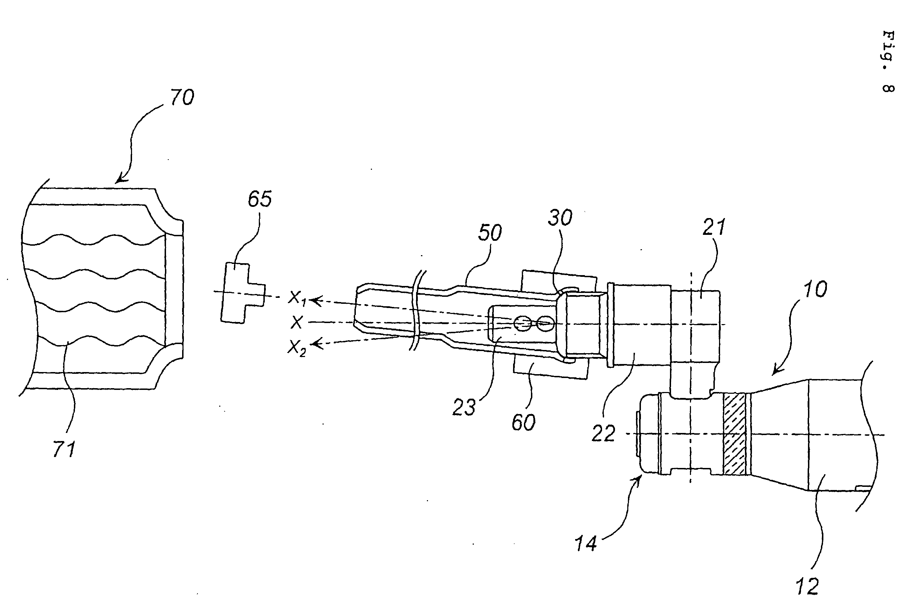

In an aspect shown in Fig. 10, the center axes of the diffuser portion 20 and the tube-like connecting member 50 coincide with each other. However, a shape or a structure of a module case are miscellaneous and a mounted state of a module case to a vehicle varies according to a kind of a vehicle. Therefore, in some cases, it is desirable that, when the inflator is attached to the module case, the center axis of the tube-like connecting member and the center axis of the diffuser member are not coincident with each other. In such a case, as shown in Fig. 8, it is required to adjust the attaching direction such that the center axis of the tube-like connecting member 50 becomes X₁ or X₂, that is, to adjust an angle formed by the center axis X of the diffuser portion 20 and the center axis X₁ or X₂ of the tube-like connecting member 50 (the attaching angle of the tube-like connecting member, which is the attaching direction of the tube-like connecting member).

However, as described above, since the inclined surface of the spreading portion 51 provided at the opening edge of the one end in the tube-like connecting member 50 abuts against and is fixed to a inclined surface of the distal end portion 30 of the diffuser portion 20, the attaching angle of the tube-like connecting member 50 is determined accordingly, so that it becomes difficult to adjust the attaching angle to a desired angle. In addition, when a working precision of a surface of the distal end portion 30 which abuts against the spreading portion 51 of the tube-like connecting member 50 at attaching is coarse, the attaching angle of the tube-like connecting member may be restricted to an angle different from an angle intended originally. Further, since the tube-like connecting member 50 having a size of about 0.5 to 1 m is used according to a kind of a vehicle, a slight deviation of a proximal portion (in the diffuser portion 20 side) causes a large deviation of the distal end portion (in a module case 70 side), so that the above-described angle adjustment becomes more difficult.

Furthermore, conventionally, when the inflator 100 is attached to the module case 70, the following assembling procedure is conducted. First, the inflator 100 is fixed at the inflator housing 12. Next, after the spreading portion 51 of the tube-like connecting member 50 is made to abut against the distal end portion 30 and the direction of the tube-like connecting member 50 is adjusted, the diffuser portion 20 and the nut 60 are screwed to each other to fix the tube-like connecting member 50 to the diffuser portion 20. Thereafter, the tube-like connecting member 50 is inserted into the module case 70.

In such a procedure, however, there may occur such a case that the attaching angle of the tube-like connecting member 50 once adjusted is deviated due to a force applied when the diffuser portion 20 and the nut 60 are screwed and fixed to each other, so that re-adjustment is required. When the tube-like connecting member is forcibly inserted into the module case in a state that the angle has been deviated in this manner, there may also occur such a case that the module case 70 pressed by the tube-like connecting member 50 deforms.

### Disclosure of the Invention

As described above, in the conventional inflator, a working to attach the inflator to the module case is unsatisfactory for various reasons, and in some conventional attaching methods, the working at the time of attachment to the module case is unsatisfactory, which is required to be improved.

An object of the present invention is to provide an inflator with improved capability for attachment which can securely and easily be attached to a module case accommodating an air bag, a tube-like connecting member used for the attachment, an air bag system using the inflator and the tube-like connecting member, and a method of attaching an inflator to a module case.

### (1) First Solving Means

The invention described in claim 1 provides, as one means for solving the above-described problem, an inflator with improved capability for attachment comprising an inflator housing in which a pressurized medium is charged as an inflating medium for an air bag and a diffuser portion which is fixed to the inflator housing and is provided with a gas discharging port for discharging the pressurized medium outside at actuation, wherein
when the inflator is attached to a module case accommodating an air bag, the diffuser portion and the module case are connected to each other through a tube-like connecting member, and a surface of the diffuser portion which abuts against an opening edge of one end in the tube-like connecting member at a time of attachment is a convex spherical surface, a concave spherical surface or a concave inclined surface.

In the above invention, it is preferable that the diffuser portion has a connecting portion to the inflator housing, a main body portion and a protrusion portion having a gas discharging port, and a surface of a distal end portion of the main body portion which abuts against the opening edge of the one end in the tube-like connecting member at the time of attachment is a convex spherical surface, a concave spherical surface or a concave curved surface.

In this manner, by forming the surface of the diffuser portion, preferably the surface of the distal end portion of the main body portion in the diffuser portion into a convex spherical surface, a concave spherical surface or concave curved surface, it is unnecessary to set the opening edge of the one end in the tube-like connecting member to a specific shape, and even if a working precision is insufficient, the attaching direction of the tube-like connecting member is adjusted easily to a desired direction.

### (2) Second Solving Means

The invention described in claim 3 provides, as one means for solving the above-described problem, a tube-like connecting member which is used at the time of attaching the inflator according to claim 1 or 2 to a module case accommodating an air bag, wherein an opening edge of one end in the tube-like connecting member which abuts against a surface of the diffuser portion in a shape of a convex spherical surface, a concave spherical surface or a concave inclined surface has a spreading portion expanded outwardly or reduced inwardly, and an inner peripheral surface or an outer peripheral surface of the spreading portion is a inclined surface or a spherical surface.

By forming the inner peripheral surface of the spreading portion provided at the opening edge of the one end in the tube-like connecting member into the inclined surface or the spherical surface in this manner, even if the working precision of an inner peripheral surface or an outer peripheral surface of the spreading portion is insufficient and the surface is coarse, the attaching direction of the tube-like connecting member can be adjusted to a desired direction (for example, the direction of X₁ or X₂ shown in Fig. 8).

In the above invention, as described below, by relating the surface of the diffuser portion and the shape of the spreading portion of the opening edge of the one end in the tube-like connecting member to each other, the attaching direction of the tube-like connecting member is adjusted easily to the desired direction at the time of attachment.
(a) When the surface of the diffuser portion (preferably, a surface of the distal end portion of the main body portion) which abuts against the spreading portion of the opening edge of the one end in the tube-like connecting member at the time of attachment is a convex spherical surface, the inner peripheral surface of the spreading portion is a inclined surface or a concave spherical surface.
(b) When the surface of the diffuser portion (preferably, a surface of the distal end portion of the main body portion) which abuts against the spreading portion of the opening edge of the one end in the tube-like connecting member at the time of attachment is a concave spherical surface, the inner peripheral surface of the spreading portion is a convex spherical surface.
(c) When the surface of the diffuser portion (preferably, a surface of the distal end portion of the main body portion) which abuts against the spreading portion of the opening edge of the one end in the tube-like connecting member at the time of attachment is a concave inclined surface, the inner peripheral surface of the spreading portion is a convex spherical surface.

In the above invention, it is preferable that a protrusion portion is provided on an outer peripheral surface in the vicinity of the spreading portion of the tube-like connecting member. When such a protrusion portion is provided, a fixing effect is enhanced by a fastening means.

### (3) Third Solving Means

The invention described in claim 8 provides, as one means for solving the above-described problem, an air bag system comprising the inflator according to in claim 1 or 2, an impact sensor which detects an impact to actuate the inflator, an air bag in which a gas generated in the inflator is introduced to be inflated, and a module case which accommodates the air bag, wherein
a diffuser portion of the inflator and the module case in which the air bag is accommodated are connected to each other through the tube-like connecting member according to any one of claims 3 to 7.

In such air bag system, since a capability for attaching the inflator to the module case is excellent, an assembling work is facilitated and a deformation or the like of the module case never occurs.

In the above invention, preferably, a connecting portion between the diffuser portion of the inflator and the tube-like connecting member according to any one of claims 3 to 7 is fixed from the outside.

In the above invention, preferably, a male screw potion is formed on an outer peripheral surface of the diffuser portion, and a female screw portion is formed on an inner peripheral surface of the fastening means, so that the diffuser portion and the fastening means are fixed by screwing.

In the above invention, preferably, the fastening means has a concave inner surface corresponding to a convex of the outer surface of the tube-like connecting member. By using such a fastening means, it becomes easier to adjust the attaching direction of the tube-like connecting member at the time of attachment.

### (4) Fourth Solving Means

The invention described in claim 12 provides, as one means for solving the above-described problem, a method of attaching an inflator, which is a method of attaching the inflator according to claim 1 or 2 to a module case accommodating an air bag with using the tube-like connecting member according to any one of claims 3 to 7, wherein the attachment is performed according to the following assembling processes 1 to 4.
Process 1: fixing an inflator housing by fixing means.
Process 2: attaching a positioning jig at an opening portion of the tube-like connecting member in the side to which the module case is connected, making the an opening portion of the tube-like connecting member in the side to which the module case is connected abut against the diffuser portion surface and, at the same time, adjusting the attaching direction (the angle formed by the center axis of the diffuser portion and the center axis of the tube-like connecting member) of the tube-like connecting member.
Process 3: fastening a connecting portion of the diffuser portion and the tube-like connecting member from the outside by fastening means to fix them.
Process 4: removing the positioning jig and inserting the tube-like connecting member into the module case.

According to the above-described method of attaching the inflator, since the direction of the center axis of the tube-like connecting member can be adjusted to a desired direction in Process 2, an attaching work in the module case is made easier. Further, by attaching the positioning jig in Process 2, the attaching direction of the tube-like connecting member can be fixed. Furthermore, even if fastening and fixing are conducted by the fastening means in Process 3, the attaching direction of the tube-like connecting member adjusted in Process 2 is prevented from being deviated by a force applied at the time of fastening.

By combining the inflator and the tube-like connection means in the present invention to attach the inflator to the module case, the attaching direction of the tube-like connecting member can be adjusted to a desired direction. For this reason, the attaching work for the inflator is made easier, so that working is largely improved.

### Brief Description of the Drawings

Fig. 1 is a drawing showing a method of attaching an inflator to a module case of the present invention.
Fig. 2 is a drawing showing a method of attaching an inflator to a module case of another embodiment.
Fig. 3 is a drawing showing a method of attaching an inflator to a module case of another embodiment.
Fig. 4 is a drawing showing a method of attaching an inflator to a module case of another embodiment.
Fig. 5 is a drawing showing a method of attaching an inflator to a module case of another embodiment.
Fig. 6 is a drawing showing a method of attaching an inflator to a module case of another embodiment.
Fig. 7 is a drawing showing a method of attaching an inflator to a module case of another embodiment.
Fig. 8 is a view describing an attaching method of the present invention.
Fig. 9 is a plane view of a conventional inflator.
Fig. 10 is a view describing a conventional method of attaching an inflator to a module case.

### Description of Numerals

10 inflator
12 inflator housing
14 rupturing means accommodating chamber
20 diffuser portion
21 connecting portion
22 main body portion
23 protrusion portion
25 gas discharging port
30 surface of a distal portion of a diffuser main body portion
60 fastening means
70 module case
71 air bag

### Preferred Embodiment of the Invention

Embodiments including the above-described first to fourth solving means will be explained as follows with reference to the drawings attached to this specification.

### (1) Embodiment 1

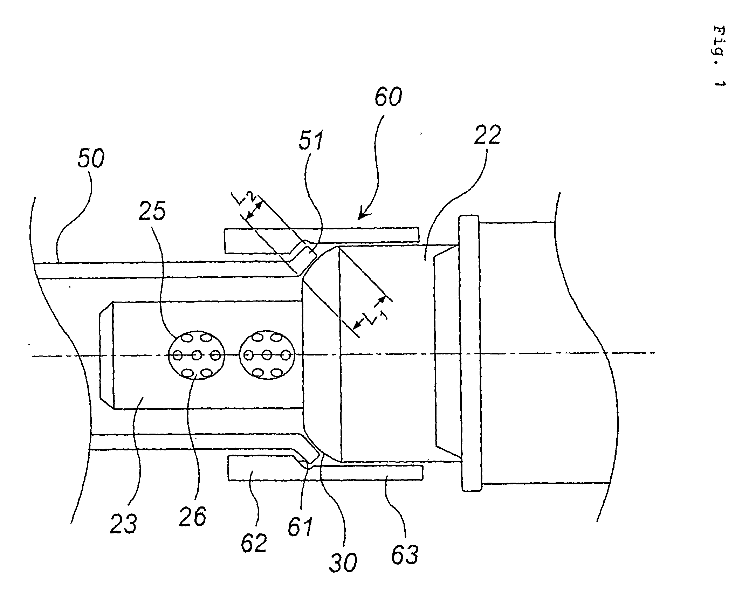

Fig. 1 is a partial plane view for describing a connecting state of an inflator 10, a tube-like connecting member 50 and the fastening means 60. The inflator 10 shown in Fig. 1 is different from an inflator 100 shown in Fig. 9 in a shape of a surface (a surface of a distal end portion 30 of a main body portion 22) of a diffuser portion 20 as well as in that a screen 26 is provided, but it is identical to the inflator 100 shown in Fig. 9 in the not-illustrated other portions and the internal structure. Therefore, the description is made according to Fig. 1 and Fig. 9.

The inflator 10 is provided with an inflator housing 12 in which a gas such as argon or helium is charged with a high pressure, a rupturing means accommodating chamber 14 connected to the inflator housing 12 (the inflator housing 12 and the rupturing means accommodating chamber 14 may be constituted with a single member formed integrally) , and a diffuser portion 20 connected to an opening portion provided on a side surface of the rupturing means accommodating chamber 14. A rupturable plate closes between the inflator housing 12 and the rupturing means accommodating chamber 14, and an electric igniter for rupturing the rupturable plate is accommodated in the rupturing means accommodating chamber 14. Incidentally, besides the embodiment shown in Fig. 9, an embodiment in which the diffuser portion 20 is provided on the extension of a center axis of the inflator housing 12 may be employed.

The diffuser portion 20 is a member for setting a discharging direction of a gas to be coaxial with the inflator housing 12, and it is mounted such that the center axis of the inflator housing 12 and the center axis of the diffuser portion 20 coincide with each other. The diffuser portion 20 is provided with a connecting portion (a diffuser connecting portion) 21, a main body portion (a diffuser main body portion) 22 and a protrusion portion (a diffuser protrusion portion) 23 having a predetermined number of gas discharging ports 25. A filter 26 for removing foreign matters (ruptured pieces of a ruptured rupturable plate) is provided inside the diffuser protrusion portion 23 to cover the gas discharging ports 25 from the inside.

A surface of a distal end portion 30 of the diffuser main body portion 22 is formed in a convex spherical surface (convex-like arc of the sectional view in the axial line) and a male screw portion is formed on an outer peripheral surface in the vicinity of the distal end portion 30.

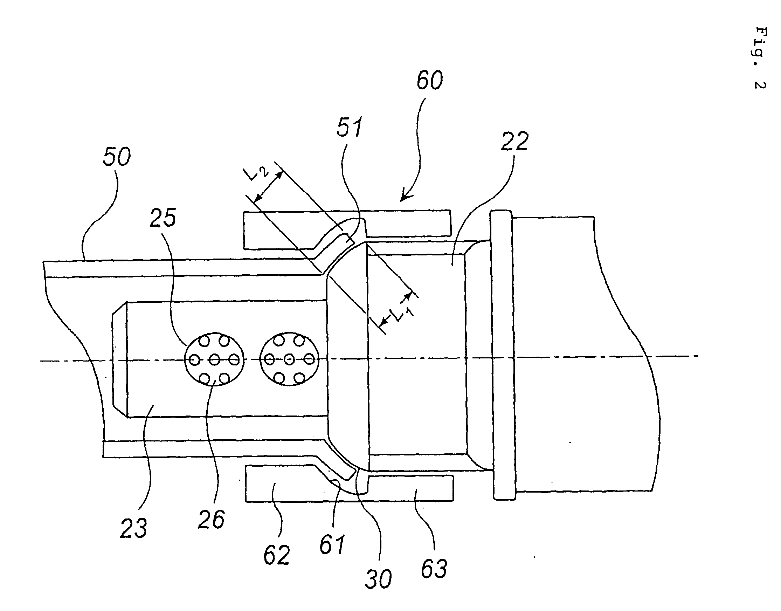

An opening edge of a tube-like connecting member 50 which abuts against a surface of the distal end portion 30 of the diffuser main body portion 22 has a spreading portion 51 expanded outwardly, and an inner peripheral surface of the spreading portion 51 is formed in inclined surface (an axial section slopes with respect to the axial direction = an inclined surface). The width of the spreading portion 51 is constant but it can be varied. When the width of the spreading portion 51 is varied, for example, a width of a half circle portion of the spreading portion may be smaller than the remaining half circle portion thereof. When the half circle portion of the spreading portion 51 is narrowed in this manner, since it becomes easier to incline the tube-like connecting member 50 in a direction of the narrowed spreading portion 51, it becomes easier to adjust the attaching direction. A similar constitution can be employed in embodiments shown in the following Fig. 2 to Fig. 7.

A relationship of a length L₁ of an arc on a convex spherical surface of the distal end portion 30 of the diffuser main body portion 22 and a length L₂ of a straight line on a inclined surface of an inner peripheral surface of the spreading portion 51 meets L₁ ≥ L₂ when the center axes of the diffuser portion 20 and the tube-like connecting member 50 coincide with each other as shown in Fig. 10. But it is preferable that, when an adjustment to a desired direction such as an X₁ or X₂ direction (a desired angle) is made, the relationship meets the L₁ > L₂, as shown in Fig. 8.

A nut 60 is a fastening means for fixing a connecting portion of the tube-like connecting member 50 and the diffuser main body portion 22. The nut 60 has a stepped portion 61 corresponding to a convex shape of the spreading portion 51 of the tube-like connecting member 50, and the stepped portion 61 divides the nut 60 into a thicker portion 62 and a thinner portion 63, and a female screw portion is provided on the thinner portion 63.

An outer peripheral surface of the spreading portion 51 of the tube-like connecting member 50 abuts against the stepped portion 61 of the nut 60, but an abutting state between the stepped portion 61 and the spreading portion 51 varies depending on the attaching direction of the tube-like connecting member 50. For this reason, it is desirable that a shape of an inner peripheral surface including the stepped portion 61 has a clearance (a space) which deals with a change by adjusting a clearance between the outer peripheral surface of the tube-like connecting member 50 and the inner peripheral surface of the thicker portion 62 or applying a recess to a step of the stepped portion 61 to deal with a predetermined abutting state between the stepped portion 61 and the spreading portion 51. In the inflator 10 shown in Fig. 1, since the distal end portion 30 of the diffuser main body portion 22 has a convex spherical surface and the inner peripheral surface of the spreading portion 51 is a inclined surface, a contacting area is reduced and the attaching direction can be adjusted by slightly inclining the tube-like connecting member 50, so that the working degree of an inner surface of the nut 60 (a space) may be small. A position corresponding to the space may be covered with a flexible member (a rubber or the like) or a plastic member, or a portion corresponding to the space can be formed with a flexible member (a rubber or the like) or a plastic member in order to deal with a change of the abutting state of the stepped portion 61 and the spreading portion 51.

The connecting portion of the diffuser main body portion 22 and the tube-like connecting member 50 is fixed by screwing the female screw portion of the nut 60 and the male screw portion of the main body portion 22 to each other.

,In the embodiment shown in Fig. 1, since the distal end portion 30 of the diffuser main body portion 22 is formed in a convex spherical surface and the spreading portion 51 of the tube-like connecting member 50 has a inclined surface, the attaching direction of the tube-like connecting member 50 is adjusted easier, (furthermore, if required, by adjusting to meet the relationship of the above-described L₁ ≥ L₂ or L₁ > L₂) it is possible to adjust into a desired direction such as an X₁ or X₂ direction as shown in Fig. 8, in addition to adjusting into a direction in which the center axis of the diffuser portion 20 and the center axis of the tube-like connecting member 50 coincide with each other as shown in Fig. 10.

Furthermore, when the diffuser portion 20 and the tube-like connecting member 50 are fixed by screwing the nut 60, the outer peripheral surface of the spreading portion 51 is pressed axially by the stepped portion 61 of the nut 60, making the fixing more firmly.

### (2) Embodiment 2

Fig. 2 is a partial plane view for describing a connecting state of an inflator 10, the tube-like connecting member 50 and the fastening means 60. An inflator 10 shown in Fig. 2 is identical to the inflator 10 shown in Fig. 1.

An opening edge of a tube-like connecting member 50 which abuts against a surface of the distal end portion 30 of the diffuser main body portion 22 has a spreading portion 51 expanded outwardly, and an inner peripheral surface of the spreading portion 51 is formed in a concave spherical surface (concave-like arc of the sectional view in the axial line) corresponding to a convex spherical surface of the distal end portion 30.

A relationship between a length L₁ of an arc on a convex spherical surface (convex-like arc of the sectional view in the axial line) of the distal end portion 30 of the diffuser main body portion 22 and a length L₂ of an arc on a concave spherical surface of an inner peripheral surface of the spreading portion 51 meets L₁ ≥ L₂ when the center axes of the diffuser portion 20 and the tube-like connecting member 50 coincide with each other as shown in Fig. 10. But it is desirable that, when adjustment to a desired direction such as an X₁ or X₂ direction (a desired angle) is made, the relationship meets the L₁ > L₂ as shown in Fig. 8.

The nut 60 has a stepped portion 61 in a shape corresponding to the spreading portion 51 of the tube-like connecting member 50 and which deals with a change of abutting state with the expanded portion, the stepped portion 61 divides the nut 60 into a thicker portion 62 and a thinner portion 63 and a female screw portion is provided on the thinner portion 62.

A connecting portion of the diffuser main body portion 22 and the tube-like connecting member 50 are fixed to each other by screwing the female screw portion of the nut 60 and the male screw portion of the main body portion 22 to each other.

In the embodiment shown in Fig. 2, since the distal end portion 30 of the diffuser main body portion 22 is formed in the convex spherical surface and the inner peripheral surface of the spreading portion 51 of the tube-like connecting member 51 is formed in the concave spherical surface, (further, if desired, by adjusting to meet the relationship of the above-described L₁ ≥ L₂ or L₁ > L₂), at the time of abutting the spreading portion 51 of the tube-like connecting member 50, it is possible to easily adjust an attaching direction of the tube-like connecting member 50 only by sliding, with abutting the convex spherical surface of the distal end portion 30 against the inner peripheral surface (the concave spherical surface) of the spreading portion 51. For this reason, it is possible to adjust into a desired direction such as an X₁ or X₂ direction as shown in Fig. 8, in addition to adjusting into a direction in which the center axis of the diffuser portion 20 and the center axis of the tube-like connecting member 50 coincide with each other as shown in Fig. 10.

Furthermore, when the diffuser portion 20 and the tube-like connecting member 50 are fixed to each other by screwing the nut 60, an outer peripheral surface of the spreading portion 51 is pressed axially by the stepped portion 61 of the nut 60, making the fixing more firmly.

### (3) Embodiment 3

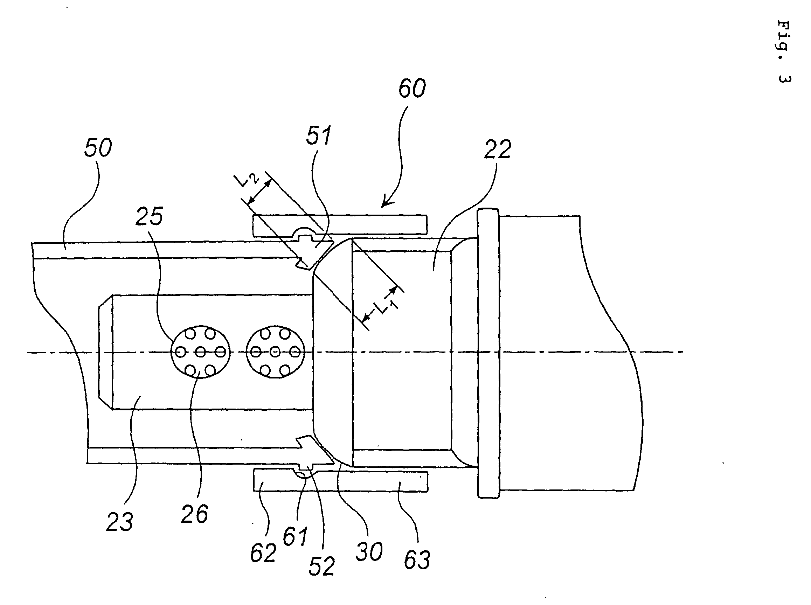

Fig. 3 is a partial plane view for describing a connection state of an inflator 10, a tube-like connecting member 50 and a fastening means 60. The inflator 10 shown in Fig. 3 is identical to the inflator 10 shown in Fig. 1.

An opening edge of a tube-like connecting member 50 which abuts against a surface of a distal end portion 30 of a diffuser main body portion 22 has a spreading portion 51 reduced inwardly, and an inner peripheral surface of the spreading portion 51 is formed in a inclined surface (an axial section slopes with respect to the axial direction, which is an inclined surface). The tube-like connecting member 50 has a protrusion portion 52 on an outer peripheral surface in the vicinity of the spreading portion 51.

A relationship between a length L₁ of an arc on a convex spherical surface (convex-like arc of the sectional view in the axial line) of the distal end portion 30 of the diffuser main body portion 22 and a length L₂ of a straight line of the inclined surface on a concave spherical surface of an inner peripheral surface of the spreading portion 51 meets L₁ ≥ L₂ when the center axes of the diffuser portion 20 and the tube-like connecting member 50 coincide with each other as shown in Fig. 10. But it is desirable that, when adjustment to a desired direction such as an X₁ or X₂ direction (a desired angle) is made, the relationship meets the L₁ > L₂ as shown in Fig. 8.

The nut 60 has a stepped portion 61 provided on the outer surface of the spreading portion 51 of the tube-like connecting member 50 and in a shape corresponding to the protrusion portion 52, and the stepped portion 61 divides the nut 60 into a thicker portion 62 and a thinner portion 63 and a female screw portion is provided on the thinner portion 62.

A connecting portion of the diffuser main body portion 22 and the tube-like connecting member 50 are fixed to each other by screwing the female screw portion of the nut 60 and the male screw portion of the main body portion 22.

In the embodiment shown in Fig. 3, since the distal end portion 30 of the diffuser main body portion 22 is formed in a convex spherical surface and an inner peripheral surface of the spreading portion 51 of the tube-like connecting member 50 is a inclined surface, the attaching direction of the tube-like connecting member 50 is adjusted easily like the first embodiment, (further, if desired, by adjusting to meet the relationship of the above-described L₁ ≥ L₂ or L₁ > L₂) it is possible to adjust into a desired direction such as an X₁ or X₂ direction as shown in Fig. 8, in addition to adjusting into a direction in which the center axis of the diffuser portion 20 and the center axis of the tube-like connecting member 50 coincide with each other as shown in Fig. 10.

Furthermore, when the diffuser portion 20 and the tube-like connecting member 50 are fixed by screwing the nut 60, the protrusion portion 52 is pressed axially by a step 61 of the nut 60, making the fixing more firmly.

### (4) Embodiment 4

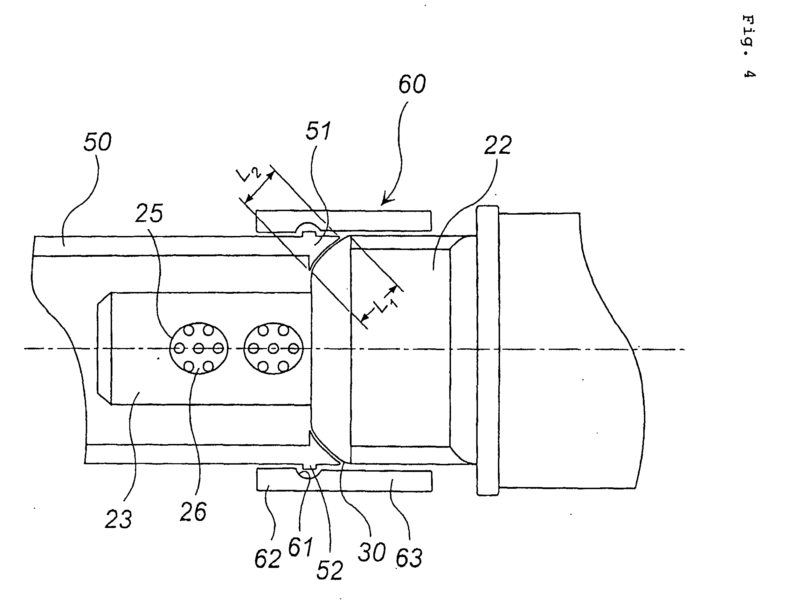

Fig. 4 is a partial plane view for describing a connection state of an inflator 10, a tube-like connecting member 50 and fastening means 60. An inflator 10 shown in Fig. 4 is identical to the inflator 10 shown in Fig. 1.

An opening edge of a tube-like connecting member 50 which abuts against a surface of a distal end portion 30 of a diffuser main body portion 22 has a spreading portion 51 reduced inwardly, and an inner peripheral surface of the spreading portion 51 is formed in a concave spherical surface (the surface whose axial section becomes a concave arc surface). The tube-like connecting member 50 has a protrusion portion 52 on an outer peripheral surface in the vicinity of the spreading portion 51.

A relationship between a length L₁ of an arc on a convex spherical surface (convex-like arc of the sectional view in the axial line) of the distal end portion 30 of the diffuser main body portion 22 and a length L₂ of an arc of the concave spherical surface of an inner peripheral surface of the spreading portion 51 meets L₁ ≥ L₂ when the center axes of the diffuser portion 20 and the tube-like connecting member 50 coincide with each other as shown in Fig. 10. But it is desirable that, when adjustment to a desired direction such as an X₁ or X₂ direction (a desired angle) is made, the relationship meets the L₁ > L₂ as shown in Fig. 8.

The nut 60 has a stepped portion 61 in a shape of corresponding to the protrusion portion 52 of the tube-like connecting member 50, and the stepped portion 61 divides the nut 60 into a thicker portion 62, and a thinner portion 63 and a female screw portion is provided on the thinner portion 62.

A connecting portion of the diffuser main body portion 22 and the tube-like connecting member 50 are fixed to each other by screwing the female screw portion of the nut 60 and the male screw portion of the main body portion 22.

In the embodiment shown in Fig. 4, since the distal end portion 30 of the diffuser main body portion 22 is formed in the convex spherical surface and the inner peripheral surface of the spreading portion 51 of the tube-like connecting member 51 is formed in the concave spherical surface, (further, if desired, by adjusting to meet the relationship of the above-described L₁ ≥ L₂ or L₁ > L₂), at the time of abutting the spreading portion 51 of the tube-like connecting member 50, it is possible to easily adjust an attaching direction of the tube-like connecting member 50 like Embodiment 2. Therefore, it is possible to adjust into a desired direction such as an X₁ or X₂ direction as shown in Fig. 8, in addition to adjusting into a direction in which the center axis of the diffuser portion 20 and the center axis of the tube-like connecting member 50 coincide with each other as shown in Fig. 10.

Furthermore, when the diffuser portion 20 and the tube-like connecting member 50 are fixed to each other by screwing the nut 60, a protrusion portion 52 is pressed axially by the stepped portion 62 of the nut 60, making the fixing more firmly.

### (5) Embodiment 5

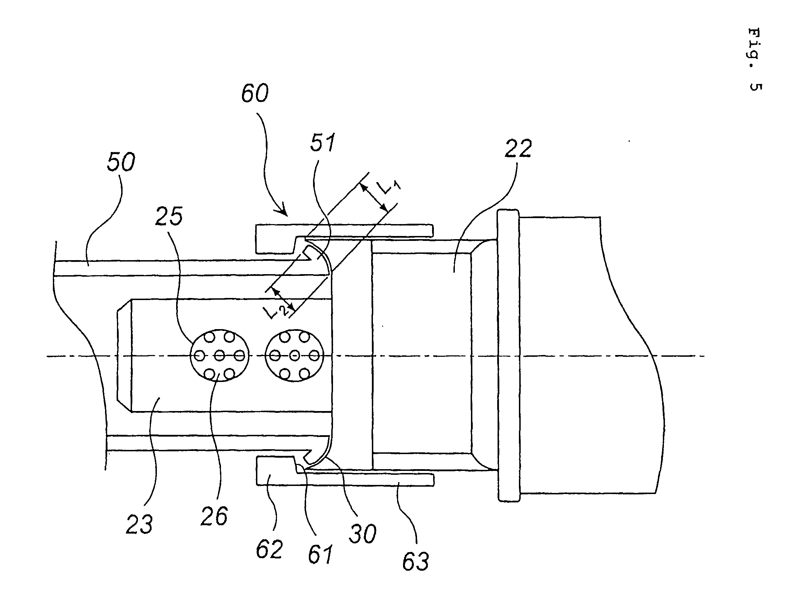

Fig. 5 is a partial plane view for describing a connecting state of an inflator 10, a tube-like connecting member 50 and fastening means 60. An inflator 10 shown in Fig. 5 is identical to the inflator 10 shown in Fig. 1 except that they are different in shape of a distal end portion 30 of a diffuser main body portion 22.

A surface of the distal end portion 30 of the diffuser main body portion 22 is formed in a concave spherical surface (the surface whose axial section becomes a concave arc surface) . A male screw portion is formed on a peripheral surface in the vicinity of the distal end portion 30 of the diffuser main body portion 22.

An opening edge of a tube-like connecting member 50 which abuts against a surface of the distal end portion 30 of the diffuser main body portion 22 has a spreading portion 51 expanded outwardly, and an inner peripheral surface of the spreading portion 51 is formed in a convex spherical surface (convex-like arc of the sectional view in the axial line).

A relationship between a length L₁ of an arc on a concave spherical surface of the distal end portion 30 of the diffuser main body portion 22 and a length L₂ of an arc of the convex spherical surface of an inner peripheral surface of the spreading portion 51 meets L₁ ≥ L₂ when the center axes of the diffuser portion 20 and the tube-like connecting member 50 coincide with each other as shown in Fig. 10. But it is desirable that, when adjustment to a desired direction such as an X₁ or X₂ direction (a desired angle) is made, the relationship meets the L₁ > L₂ as shown in Fig. 8.

The nut 60 has a stepped portion 61 in a shape of corresponding to the spreading portion 51 of the tube-like connecting member 50 as well as in a shape which can deal with a change of abutting state with the expanded portion, and the stepped portion 61 divides the nut 60 into a thicker portion 62 and a thinner portion 63 and a female screw portion is provided on the thinner portion 62.

A connecting portion between the diffuser main body portion 22 and the tube-like connecting member 50 is fixed to each other by screwing the female screw portion of the nut 60 and the male screw portion of the main body portion 22 to each other.

In the embodiment shown in Fig. 5, since the distal end portion 30 of the diffuser main body portion 22 is formed in the concave spherical surface and the inner peripheral surface of the spreading portion 51 of the tube-like connecting member 51 is formed in the convex spherical surface, (further, if desired, by adjusting to meet the relationship of the above-described L₁ ≥ L₂ or L₁ > L₂), at the time of abutting the spreading portion 51 of the tube-like connecting member 50, it is possible to easily adjust an attaching direction of the tube-like connecting member 50 like Embodiment 2. Therefore, it is possible to adjust into a desired direction such as an X₁ or X₂ direction as shown in Fig. 8, in addition to adjusting into a direction in which the center axis of the diffuser portion 20 and the center axis of the tube-like connecting member 50 coincide with each other as shown in Fig. 10.

Furthermore, when the diffuser portion 20 and the tube-like connecting member 50 are fixed to each other by screwing the nut 60, an outer peripheral surface of the spreading portion 51 is pressed axially by the stepped portion 61 of the nut 60, making the fixing more firmly.

### (6) Embodiment 6

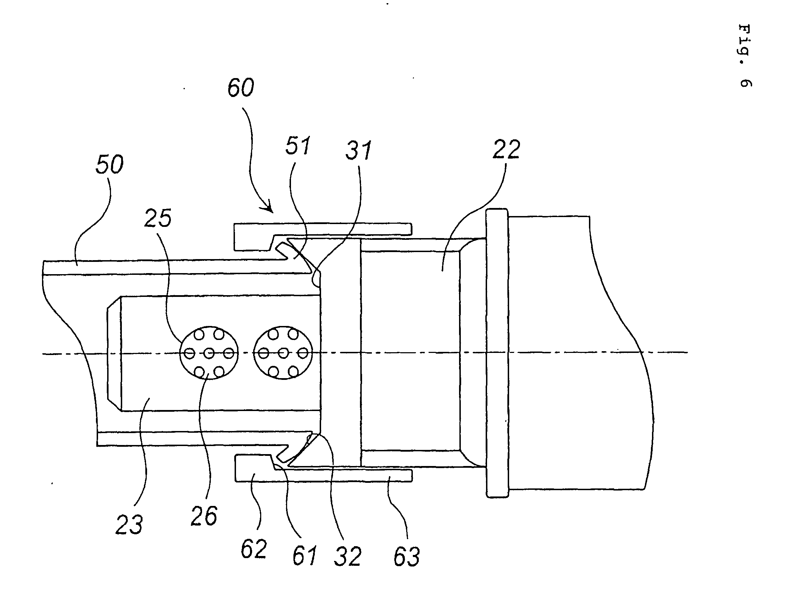

Fig. 6 is a partial plane view for describing a connecting state of an inflator 10, a tube-like connecting member 50 and a fastening means 60. The inflator 10 shown in Fig. 6 is identical to the inflator 10 shown in Fig. 1 except that they are different in shape of the distal end portion 30 of the diffuser main body portion 22.

A distal end portion 30 of the diffuser main body portion 22 has a shape obtained by combining a flat surface 31 and a inclined surface (a slanting surface) 32, and a male screw portion is formed on a peripheral surface in the vicinity of the distal end portion 30. An angle defined by the center axis and the inclined surface 32 of the diffuser portion 20 is set to 45 degrees. Here, the total length of the flat surface 31 and the inclined surface 32 corresponds to L₁.

An opening edge of a tube-like connecting member 50 which abuts against a surface of the distal end portion 30 of the diffuser main body portion 22 has a spreading portion 51 expanded outwardly, and an outer peripheral surface of the spreading portion 51 is formed in a convex spherical surface (convex-like arc of the sectional view in the axial line). The tube-like connecting member 50 has a protrusion portion 52 on the outer surface in the vicinity of the spreading portion 51.

The nut 60 has a stepped portion 61 in a shape corresponding to the protrusion portion 52 of the tube-like connecting member 50, and the stepped portion 61 divides the nut 60 into a thicker portion 62 and a thinner portion 63 and a female screw portion is provided on the thinner portion 62.

The relationship between the total length L₁ of the flat surface 31 and the inclined surface 32 and a length L₂ of an arc on a convex spherical surface on an outer peripheral surface of the spreading portion 51 meets L₁ > L₂.

A connecting portion between the diffuser main body portion 22 and the tube-like connecting member 50 is fixed to each other by screwing a female screw portion of the nut 60 and a male screw portion of the main body portion 22 to each other.

In the embodiment shown in Fig. 6, since the distal end portion 30 of the diffuser main body portion 22 is an inclined portion 32 and the outer peripheral surface of the spreading portion 51 of the tube-like connecting member 51 is formed in the convex spherical surface, it is possible to easily adjust an attaching direction of the tube-like connecting member 50 like Embodiment 1. And further, because of L₁ > L₂, it is possible to adjust into a desired direction such as an X₁ or X₂ direction as shown in Fig. 8, in addition to adjusting into a direction in which the center axes of the diffuser portion 20 and the tube-like connecting member 50 coincide with each other as shown in Fig. 10.

Furthermore, when the diffuser portion 20 and the tube-like connecting member 50 are fixed to each other by screwing the nut 60, a protrusion portion 52 is pressed axially by the stepped portion 61 of the nut 60, making the fixing more firmly.

### (7) Embodiment 7

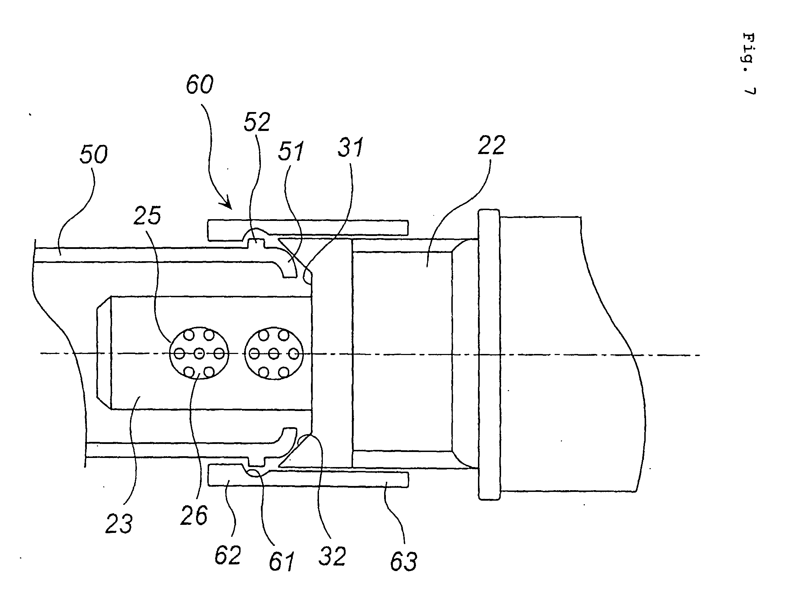

Fig. 7 is a partial plane view for describing a connecting state of an inflator 10, a tube-like connecting member 50 and fastening means 60. The inflator 10 shown in Fig. 7 is identical to the inflator 10 shown in Fig. 6, and the tube-like connecting member 50 and the nut 60 are identical to those shown in Fig 5.

In the embodiment shown in Fig. 7, since the distal end portion 30 of the diffuser main body portion 22 is an inclined portion 32 and the outer peripheral surface of the spreading portion 51 of the tube-like connecting member 51 is formed in the convex spherical surface, it is possible to easily adjust an attaching direction of the tube-like connecting member 50 like Embodiment 1. And further, because of L₁ > L₂, it is possible to adjust into a desired direction such as an X₁ or X₂ direction as shown in Fig. 8, in addition to adjusting into a direction in which the center axis of the diffuser portion 20 and the center axis of the tube-like connecting member 50 coincide with each other as shown in Fig. 10.

Furthermore, when the diffuser portion 20 and the tube-like connecting member 50 are fixed to each other by screwing the nut 60, a spreading portion 51 is pressed axially by the stepped portion 61 of the nut 60, making the fixing more firmly.

### (8) Embodiment 8

An air bag system comprises an inflator, an impact sensor which detects an impact to actuate the gas generator, an air bag which introduces a gas generated in the gas generator to inflate and a module case which accommodates the air bag, and it may has the same constitution as that shown in Fig. 17 of JP-A 11-334517, for example.

In the air bag system, for example, the inflator and the module case are connected to each other as shown in Fig. 10, and, as to a combination of the inflator, the tube-like connecting member and the fastening means, the embodiments shown in Fig. 1 to Fig. 7 can be applied.

### (9) Embodiment 9

An attaching method of an inflator according to the assembling processes 1 to 4 will be explained with reference to Fig. 8. First, in Process 1, the inflator 10 (the inflator housing 12) is fixed by fixing means.

Next, in Process 2, the positioning jig 65 is attached to the opening portion of the tube-like connecting member 50 in the side to which the module case is connected, the surface of the distal end 30 of the diffuser main body portion 22 abuts against the opening portion of the tube-like connecting member in the side to which the diffuser portion is connected, and, at the same time, the attaching direction of the tube-like connecting member 50 is adjusted.

In this Process 2, the surface of the distal end 30 of the diffuser main body portion 22 abuts against the opening portion of the tube-like connecting member 50 in the side to which the diffuser portion is connected, and, at the same time, the positioning jig 65 is attached to the opening portion of the tube-like connecting member 50 in the side to which the module case is connected after the direction of the central axis of the tube-like connecting member 50 is adjusted.

The positioning jig 65 is for preventing deviation in the attaching direction of the tube-like connecting member 50 due to a force applied at the time of fixing with the fastening means (nut) 60 in the next Process 3. Therefore, any jig can be used as long as it can be inserted into the opening portion of the tube-like connecting member 50 in the side to which the module case is connected, or it can sheathe the opening portion to support.

Next, in Process 4, the connecting portion between the diffuser portion 20 and the tube-like connecting member 50 is fixed from the outside by the fastening means 60.

If the positioning jig 65 is not used, the tube-like connecting member 50 may be deviated from a desired attaching direction by a force applied at the time of fastening with the fastening means 60. However, by fitting the positioning jig 65 into the opening portion 55 of the tube-like connecting member 50 in the side to which the module case is connected in order to support the same, a deviation never occurs in the attaching direction of the tube-like connecting member 50 even at a time of fastening.

Next, in Process 5, the positioning jig 65 is removed and the tube-like connecting member 50 is inserted into the module case 70.

The inflator, the tube-like connecting member, the air bag system and the method of attaching an inflator of the present invention can be applied to various inflators such as an inflator for an air bag for a driver side, an inflator for an air bag for a passenger side next to the driver, an inflator for an air bag for side collision, an inflator for an curtain air bag, an inflator for a knee-bolster air bag, an inflator for an inflatable seat belt, an inflator for a tubular system, and an inflator for a pretensioner, and air bag systems including these inflators.

## Claims

1. An inflator with improved capability for attachment comprising an inflator housing in which a pressurized medium is charged as an inflating medium for an air bag and a diffuser portion which is fixed to the inflator housing and is provided with a gas discharging port for discharging the pressurized medium outside at actuation, wherein when the inflator is attached to a module case accommodating an air bag, the diffuser portion and the module case are connected to each other through a tube-like connecting member, and a surface of the diffuser portion which abuts against an opening edge of one end in the tube-like connecting member at a time of attachment is a convex spherical surface, a concave spherical surface or a concave inclined surface.

2. An inflator with improved capability for attachment according to claim 1, wherein the diffuser portion has a connecting portion to the inflator housing, a main body portion and a protrusion portion having a gas discharging port, and a surface of a distal end portion of the main body portion which abuts against the opening edge of the one end in the tube-like connecting member at the time of attachment is a convex spherical surface, a concave spherical surface or a concave curved surface.

3. A tube-like connecting member which is used at the time of attaching the inflator according to claim 1 or 2 to a module case accommodating an air bag, wherein an opening edge of one end in the tube-like connecting member which abuts against a surface of the diffuser portion in a shape of a convex spherical surface, a concave spherical surface or a concave inclined surface has a spreading portion expanded outwardly or reduced inwardly, and an inner peripheral surface or an outer peripheral surface of the spreading portion is a inclined surface or a spherical surface.

4. A tube-like connecting member according to claim 3, wherein, when the surface of the diffuser portion which abuts against the spreading portion of the opening edge of the one end in the tube-like connecting member at the time of attachment is a convex spherical surface, the inner peripheral surface of the spreading portion is a inclined surface or a concave spherical surface.

5. A tube-like connecting member according to claim 3, wherein, when the surface of the diffuser portion which abuts against the spreading portion of the opening edge of the one end in the tube-like connecting member at the time of attachment is a concave spherical surface, the inner peripheral surface of the spreading portion is a convex spherical surface.

6. A tube-like connecting member according to claim 3, wherein, when the surface of the diffuser portion which abuts against the spreading portion of the opening edge of the one end in the tube-like connecting member at the time of attachment is a concave inclined surface, the inner peripheral surface of the spreading portion is a convex spherical surface.

7. The tube-like connecting member according to any one of claims 3 to 6, wherein a protrusion portion is provided on an outer peripheral surface of the tube-like connecting member in the vicinity of the opening edge of one end.

8. An air bag system comprising the inflator according to in claim 1 or 2, an impact sensor which detects an impact to actuate the inflator, an air bag in which a gas generated in the inflator is introduced to be inflated, and a module case which accommodates the air bag, wherein a diffuser portion of the inflator and the module case in which the air bag is accommodated are connected to each other through the tube-like connecting member according to any one of claims 3 to 7.

9. An air bag system according to claim 8, wherein a connecting portion between the diffuser portion of the inflator and the tube-like connecting member according to any one of claims 3 to 7 is fixed from the outside by a fastening means.

10. An air bag system according to claim 9, wherein a male screw potion is formed on an outer peripheral surface of the diffuser portion, a female screw portion is formed on an inner peripheral surface of the fastening means, and the diffuser portion and the fastening means are fixed by screwing.

11. An air bag system according to claim 9 or 10, wherein the fastening means has a concave inner surface corresponding to a convex of the outer surface of the tube-like connecting member.

12. A method of attaching an inflator, which is a method of attaching the inflator according to claim 1 or 2 to a module case accommodating an air bag by using the tube-like connecting member according to any one of claims 3 to 7, wherein the attachment is performed according to the following assembling processes 1 to 4:
Process 1: fixing an inflator housing by fixing means.
Process 2: attaching a positioning jig at an opening portion of the tube-like connecting member in the side to which the module case is connected, making the an opening portion of the tube-like connecting member in the side to which the module case is connected abut against the diffuser portion surface and, at the same time, adjusting the attaching direction (the angle formed by the center axis of the diffuser portion and the center axis of the tube-like connecting member) of the tube-like connecting member.
Process 3: fastening a connecting portion of the diffuser portion and the tube-like connecting member from the outside by fastening means to fix them.
Process 4: removing the positioning jig and inserting the tube-like connecting member into the module case.
